# DEMANDE DE BREVET EUROPEEN

(11) **EP 1 566 126 A1**
(43) Date de publication de la demande: **24.08.2005**
(21) Numéro de dépôt: 05002136.9
(22) Date de dépôt: 02.02.2005
(51) Int. Cl.: A47J 31/40

(54) **Machine à café**

(30) Priorité: 23.02.2004 PT 10308104
(71) Demandeur: FLAMA - Fàbrica de Loucas e Electrodomésticos, S.A., 3701 - 906 Cesar (PT)
(72) Inventeur: Azevedo, Luis Miguel Silva Alves de, 3700 - 638 Cesar (PT)
(74) Mandataire: Alves Moreira, Pedro

(57) **Abrégé**

L'invention se rapporte à une machine à café comportant une partie fixe (5) et une partie mobile (6) ainsi qu'un mécanisme de rapprochement et de fermeture desdites parties actionné par une manette (8) montée autour d'un axe de pivotement (9) ; ledit mécanisme comportant un dispositif de translation verticale de la partie mobile (6) vers la partie fixe (5)et comprenant deux glissières (12) et deux patins (13).

Selon l'invention le dispositif de translation comporte en outre deux biellettes (18a, 18b) articulées entre elles au moyen d'un pivot (19) fixé en l'une de leurs extrémités et reliées respectivement par leurs deux autres extrémités à deux manetons solidaires (17a), (17b) respectivement de la partie fixe (5) et des patins (13) ; ledit pivot (19) étant en prise avec une came (20) solidaire de la manette (8) et dont le profil présente au moins un point mort haut (22) de verrouillage de la partie mobile (6) sur la partie fixe (5).

## Description

L'invention se rapporte aux machines à café comportant un bâti comprenant un chauffe-eau, une tête d'infusion comportant une partie fixe et une partie mobile et un réceptacle filtrant destiné à être placé dans la partie mobile et à recevoir une dose de café, ainsi qu'un mécanisme de rapprochement et de fermeture desdites parties actionné par une manette montée mobile sur le bâti autour d'un axe de pivotement horizontal et selon une course déterminée entre deux positions haute et basse.

Elle concerne, plus précisément, les machines dont le mécanisme comporte un dispositif de translation verticale de la partie mobile vers la partie fixe comprenant deux glissières verticales opposées solidaires de la partie fixe et deux patins solidaires de la partie mobile insérés respectivement dans lesdites glissières.

Une machine à café équipé d'un tel mécanisme de rapprochement et de fermeture est connu du document EP A1208782. D'après ce document le mécanisme entraîne en fin de course de la poignée la partie mobile en translation verticale et est associé avec un organne d'arrêt qui bloque la partie mobile en une position définie pour garantir l'étanchéité de la tête d'infusion. Un tel mécanisme est complexe, entraîne un coût de fabrication élevé et n'assure pas constamment la sécurité d'étanchéité lors de la contre-pression exercée sur la pièce mobile, et donc sur le mécanisme, lors de l'injection de l'eau chaude sous pression et/ou de la vapeur dans ladite tête d'infusion.

L'objet de la présente invention vise en conséquence à simplifier le mécanisme de rapprochement et de fermeture tout en garantissant une étanchéité de la tête d'infusion quelque soient les pressions existantes dans ladite tête dues au chargement différent en café par différentes dosettes du type sachet, capsule ou mouture libre.

En outre, un autre but de l'invention est de rendre ergonomique le fonctionnement en offrant à l'utilisateur une poignée à déplacement frontal et course faible.

Selon l'invention, le dispositif de translation verticale comporte en outre deux biellettes articulées entre elles au moyen d'un pivot fixé en l'une de leurs extrémités et reliées respectivement par leur deux autres extrémités à deux manetons solidaires respectivement de la partie fixe et des patins mobiles ; ledit pivot étant en prise avec une came pratiquée dans une aile solidaire de la manette et agencée dans un plan transversal à l'axe de pivotement de la manette et dont le profil présente au moins un point mort haut de verrouillage de la partie mobile contre la partie fixe.

Ainsi, grâce à la liaison directe de la manette avec la came, on assure,non seulement, par un simple pivotement de la manette la translation positive de la partie mobile,mais aussi le verrouillage automatique, en fin de course de la manette, de la partie mobile contre la partie fixe.Ce verrouillage est d'autant plus sûr puisqu'il bloque tout mouvement du pivot et donc tout déplacement des bielletes.

Les caractéristiques et avantages de l'invention ressortiront d'ailleurs de la description qui va suivre, à titre d'exemple, en référence aux dessins annexés dans lesquels:
La figure 1 représente en coupe verticale et en perspective une partie d'une machine à café illustrant partiellement un mécanisme de rapprochement et de fermeture d'une partie mobile de la tête d'infusion selon l'invention;
Les figures 2,3 et 4 représentent respectivement, à plus petite échelle, diverses positions de la partie mobile et de son dispositif de translation.

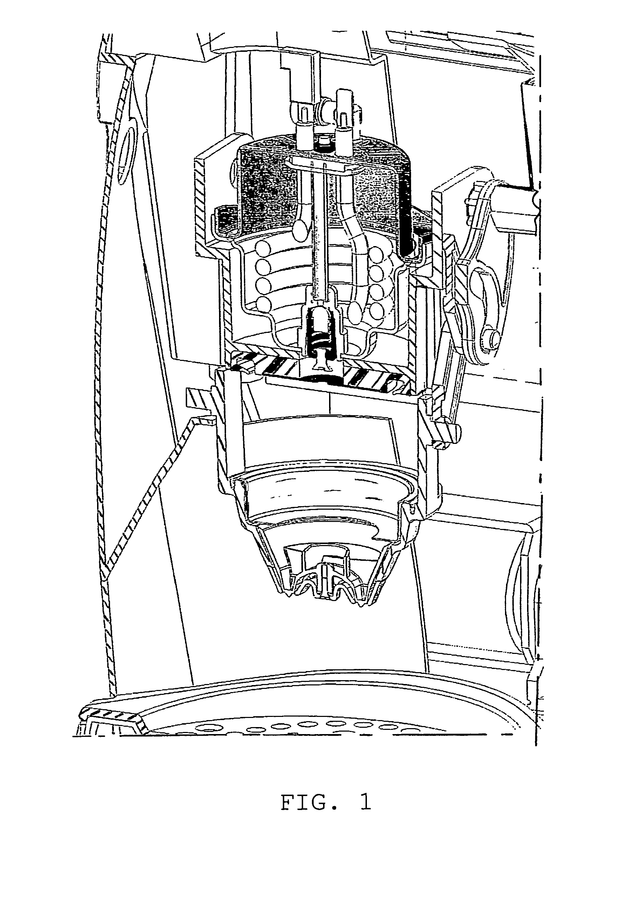

La machine à café illustrée partiellement à la figure 1 comporte un bâti 1 comprenant un chauffe-eau 2 du type chaudière avec valve 3 de régulation de pression adapté à produire de l'eau chaude et/ou vapeur sous une certaine pression qui, par exemple, peut se situer dans la plage de 0,1bar à environ 17 bars. Les pressions ayant des valeurs basses conviennent bien à la préparations d'infusions pour le marché américain, tandis que les pressions de valeurs hautes correspondent mieux à la confection d'infusions dites «espresso».

Bien entendu, la machine à café pourrait utiliser à la place d'une chaudière un bloc thermochauffant à circulation d'eau équipé d'une pompe de mise en pression de l'eau.

Le bâti 1 comporte également un tête d'infusion 4 comportant une partie fixe 5 solidaire de ce bâti et une partie mobile 6, ainsi q'un réceptacle filtrant 7 destiné à être placé dans la partie mobile 6 et à recevoir une dose de café, soit sous forme d'un sachet papier ou textile,soit sous forme de capsule rigide, soit sous forme de café moulu libre.

La machine est équipée d'un mécanisme de rapprochement et de fermeture des parties fixe 5 et mobile 6 actionné par une manette 8 (représentée partiellement sur la figure 1) montée mobile sur le bâti autour d'un axe horizontal 9 et selon une course déterminée.

De préférence, la manette est formée par une pièce en U dont les deux branches latérales 10 sont montées pivotantes selon l'axe 9 et dont la branche centrale 11 s'étend frontalement au bâti 1.

Comme on le voit bien sur la figure 1, le mécanisme comporte un dispositif de translation verticale de la partie mobile 6 vers la partie fixe 5 comprenant deux glissières verticales 12 opposées solidaires de la partie fixe et deux patins 13 solidaires de la partie mobile insérés respectivement dans les dites glissières.

Dans la réalisation représentée sur les figures, la partie mobile présente la forme d'un godet cylindrique dont le fond présente des orifices 14 découlement de l'infusion,et dont l'embouchure forme un siège 15 de réception du réceptacle filtrant 7.Le bord 16 de cette embouchure porte latéralement deux montants diamétralement opposés qui forment les patins 13. De préférence, ladite partie mobile est réalisée en une seule pièce de matériau moulé.

Selon l'invention,le dispositif de translation verticale comporte en outre, de façon asymétrique dans cet exemple de réalisation, deux biellettes 18a et 18b articulées entre elles au moyen d'un pivot 19 fixé en l'une de leurs extrémités et reliées respectivement par leur deux autres extrémités à deux manetons 17a et 17b solidaires respectivement de la partie fixe 5 et des patins 13 ;ledit pivot étant en prise avec une came 20 pratiquée dans une aile 21 solidaire de l'une des branches 10 de la manette 8 et agencée dans un plan transversal à l'axe 9 et dont le profil présente au moins un point mort haut 22 de verrouillage de la partie mobile contre la partie fixe.

Afin d'assurer une meilleure étanchéité entre les deux parties mobile et fixe, la partie fixe comporte un siège 23 recevant un joint annulaire 24 à lèvre tournée vers l'intérieur et située à l'aplomb du bord 16 de la partie mobile.

Selon une caractéristique importante de l'invention, la came 20 est formée par une lumière 25 à profil général arqué pratiquée dans l'aile 21 et présentant en une extrémité le point mort haut 22, et en l'autre extrémité un point mort bas 26 correspondant à l'écartement maximal des parties mobile 6 et fixe 5 pour la manette en position haute.

En outre, la lumière 25 présente dans sa région médiane un coude 27 prononcé destiné à empêcher le déverrouillage des deux parties fixe et mobile lorsque la manette 8 est en position basse ; c'est à dire à empêcher le glissement du pivot 19 de son point mort haut vers son point mort bas lorsqu'une surpression importante apparaît dans la tête d'infusion.

Ainsi, grâce à cette construction simplifiée du mécanisme de rapprochement et de fermeture, on a minimisé le nombre de pièces intervenant dans le dispositif de translation verticale et par conséquent les coûts de fabrication et d'assemblage. En outre, par la course limitée de la manette grâce à la démultiplication biellettes-came, on assure une ergonomie de fonctionnement, notamment en appliquant une force descendante lors de la fermeture de la tête d'infusion en direction du socle de la machine.

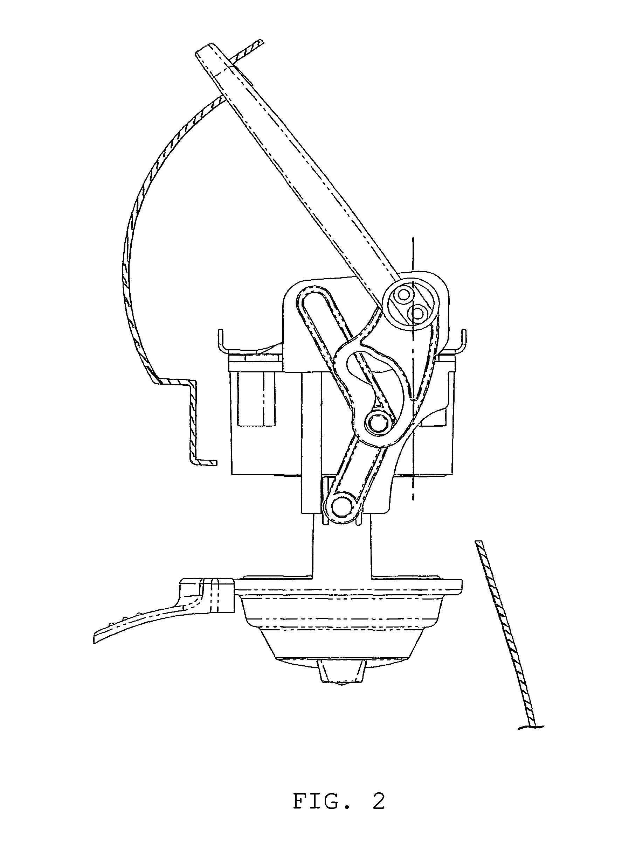

On va maintenant, en référence aux figures 2 à 4, expliquer le fonctionnement du mécanisme de rapprochement et de fermeture des parties fixe 5 et mobile 6 de la tête d'infusion.

En se rapportant à la figure 2, on observe que la manette 8 et notamment la branche centrale 11, occupe une position haute en laquelle, les parties fixe 5 et mobile 6 sont éloignées l'une de l'autre afin de permettre l'introduction aisée du réceptacle filtrant 7 contenant une dose de café. L'écartement entre lesdites deux parties est donné principalement par la longueur des montants formant des patins 13.

En cette position, le pivot 19 est situé au point mort bas 26 de la came 20 et les biellettes forment un angle obtu ouvert dans la même direction que celui de la lumière arquée 25.

Lors de la manoeuvre de la manette 8 dans un mouvement descendant, la came 20 est entraînée en rotation autour de l'axe 9 de pivotement de ladite manette et tire sur le pivot 19 en provoquant, d'une part, le pivotement de la biellette 18a autour du maneton fixe 17a, et d'autre part, un mouvement combiné de pivotement de la biellette 18b autour du maneton 17b et de translation des patins 13 dans les glissières 12.

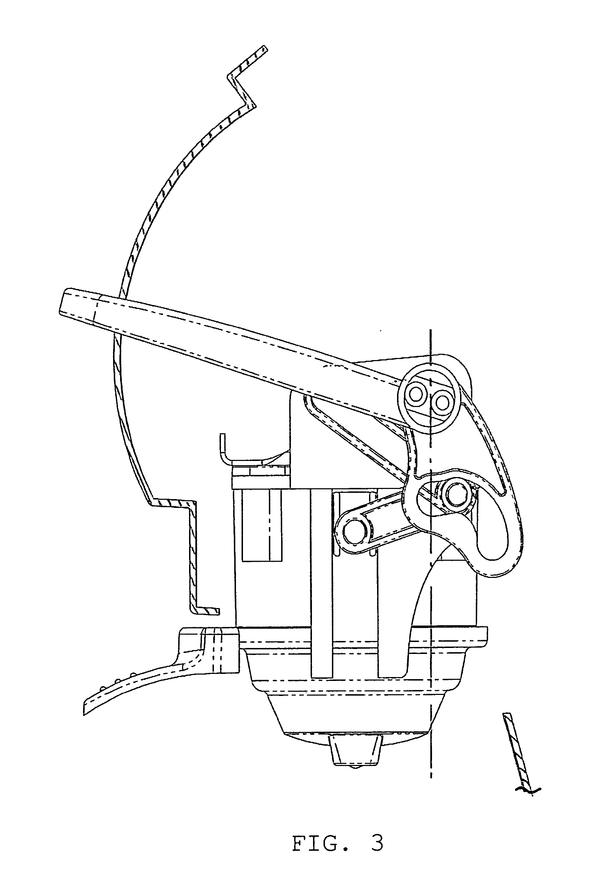

Comme représenté à la figure 3, la manette 8 est en une position intermédiaire pour laquelle la came 20 a amené les biellettes 18a et 18b selon un angle aigu et en laquelle le pivot 19 est placé sur le coude 27 et la pièce mobile 6 est amenée contre la pièce fixe 5 et plus précisément contre le joint annulaire 24.

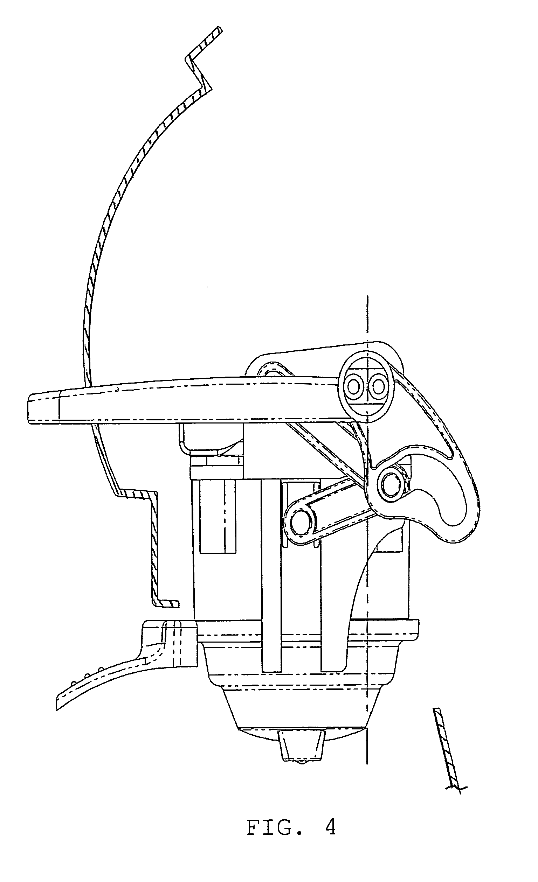

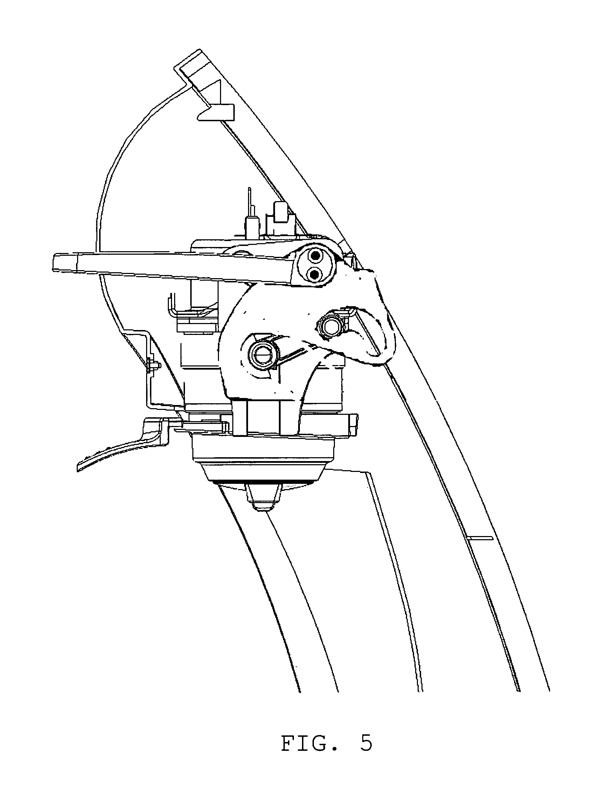

Puis, dans un mouvement descendant plus prononcé, la manette 8 vient occuper sa position basse illustrée à la figure 4 et dans laquelle, le pivot 19 est bloqué au point mort haut 22 de la came. En cette position, la partie mobile 6 est verrouillée contre la partie fixe 5 avec appui du bord du réceptacle filtrant 7 contre le joint à lèvre 24 pour assurer l'étanchéité de la tête d'infusion. Grâce au profil de la came au point mort haut et au coude 27 adjacent à ce point mort haut, on maintient le pivot 19 verrouillé en position et, présentement dans cette réalisation, au-delà mais à proximité de l'axe vertical V, garantissant ainsi l'étanchéité des deux parties fixe 5 et mobile 6 quelques soient les contraintes imposées à ces pièces visant à leur écartement sous l'effet de la haute pression de l'eau injectée, voire même des vibrations générées, par exemple, par les jeux de construction des diverses pièces ou même les pièces mécaniques généralement incluses dans ce type de machine à café telles que, par exemple, vannes et pompes électromécaniques.

Bien sûr, l'invention n'est pas limitée à l'exemple qui vient d'être décrit ; ainsi le dispositif de translation pourrait être symétrique, c'est à dire possédant deux paires de biellettes et deux cames associées respectivement aux deux branches de la manette.

## Revendications

1. Machine à café comportant un bâti (1) comprenant un chauffe-eau (2), une tête d'infusion (4) comportant une partie fixe (5) et une partie mobile (6) et un réceptacle filtant (7) destiné à être placé dans la partie mobile (6) et à recevoir une dose de café, ainsi qu'un mécanisme de rapprochement et de fermeture desdites parties actionné par une manette (8) montée mobile sur le bâti (1) autour d'un axe de pivotement (9) horizontal entre deux positions haute et basse ; ledit mécanisme comportant un dispositif de translation verticale de la partie mobile (6) vers la partie fixe (5) comprenant deux glissières (12) verticales opposées solidaires de la partie fixe et deux patins (13) solidaires de la partie mobile insérés respectivement dans lesdites glissières, **caractérisée en ce que** le dispositif de translation verticale comporte en outre deux biellettes (18a, 18b) articulées entre elles au moyen d'un pivot (19) fixé en l'une de leurs extrémités et reliées respectivement par leur deux autres extrémités à deux manetons solidaires (17a), (17b) respectivement de la partie fixe (5) et des patins (13) ; ledit pivot (19) étant en prise avec une came (20) pratiquée dans une aile (21) solidaire de la manette (8) et agencée dans un plan transversal à l'axe de pivotement (9) et dont le profil présente au moins un point mort haut (22) de verrouillage de la partie mobile (6) sur la partie fixe (5).

2. Machine à café selon la revendication 1, **caractérisée en ce que** la came (20) est formée par une lumière(25) à profil général arqué pratiquée dans l'aile (21) et présentant en une extrémité le point mort haut (22), et en l'autre extrémité un point mort bas (26) correspondant à l'écartement maximal des parties mobile(6) et fixe(5) pour la manette (8) en position haute.

3. Machine à café selon la revendication 2, **caractérisée en ce que** la lumière (25) présente dans sa région médiane un coude (27)prononcé destiné à empêcher le déverrouillage des deux parties fixe et mobile lorsque la manette (8) occupe sa position basse.

4. Machine à café selon la revendication 2 ou 3, **caractérisée en ce que** le profil de la came (20) est adapté à tirer et faire passer le pivot (19) de part et d'autre d'un axe vertical V passant par l'axe de pivotement (9) au cours du mouvement de la manette (8) de sa position haute à sa position basse et vice versa.

5. Machine à café selon l'une quelconque des revendications précédentes, **caractérisée en ce que** la partie mobile (6) présente la forme d'un godet cylindrique dont l'embouchure forme un siège (15) de réception du réceptacle filtrant (7), et la partie fixe (5) comporte un siège (23) recevant un joint annulaire (24)à lèvre tournée vers l'intérieur et situé à l'aplomb du bord (16) de l'embouchure.

6. Machine à café selon l'une quelconque des revendications précédentes, **caractérisée en ce que** la partie mobile (6) est réalisée en une seule pièce de matériau moulé et comporte deux montants opposés constituant les patins (13) et portant les manetons (17a,17b).
